# NEUE EUROPÄISCHE PATENTSCHRIFT

(11) **EP 1 825 764 B2**
(45) Veröffentlichungstag und Bekanntmachung des Hinweises auf die Entscheidung über den Einspruch: **22.11.2017**
(45) Hinweis auf die Patenterteilung: 17.02.2010
(21) Anmeldenummer: 06026656.6
(22) Anmeldetag: 22.12.2006
(51) Int. Cl.: A23L 2/58

(54) **Emulgatorzusammensetzung und deren Verwendung**
Emulsifier composition and its use
Composition émulsifiante et son utilisation

(30) Priorität: 24.02.2006 DE 202006003132 U
(43) Veröffentlichungstag der Anmeldung: 29.08.2007
(73) Patentinhaber: Sensient Colors Europe GmbH, 21502 Geesthacht (DE)
(72) Erfinder: Klingenberg, Andreas, Dr., 21465 Reinbek (DE)
(74) Vertreter: RGTH

(56) Entgegenhaltungen:
- EP-A- 1 270 679
- EP-A1- 0 956 779
- EP-A2- 0 848 913
- WO-A-01/08507
- WO-A-2005/122784
- WO-A-2007/026271
- WO-A1-2004//023900
- WO-A1-2007//047237
- GB-A- 918 399
- GB-A- 1 049 335
- GB-A- 1 049 335
- JP-A- 9 084 566
- US-A1-2002/0 028 280
- US-B2- 6 635 293
- ELVERS B. ET AL: 'Ullmann's Encyclopedia of Industrial Chemistry - Lecithin', Bd. A 15, 1990, VCH VERLAGSGESELLSCHAFT, WEINHEIM Seiten 293 - 294
- GERHARTZ W. ET AL: 'Ullmann's Encyclopedia of Industrial Chemistry - Fats and Fatty Oils', Bd. A 10, 1987, VCH VERLAGSGESELLSCHAFT MBH, WEINHEIM Seiten 176-177 - 234-236
- E322 Lecithin
- EISENBRAND G. ET AL: 'Römpp Lexikon Lebensmittel-Chemie', 1995, GEORG THIEME VERLAG, STUTTGART Seiten 162-163 - 116, 152, 507, 724
- Römpp Lexikon Chemie, Seite 4141
- Ryoto Sugar Ester Technical Information, Juni 2004
- Produktinformation POS-135
- Richtlinie 96/77/EG der Kommission zu Zuckerglyceriden (E 474)
- Wikipediaauszug "Mono-und Diglyceride von Speisefettsäuren"
- Wikipediaauszug "Lecithine"
- Wikipediaauszug "Lysophosphatidylcholine"
- Produktspezification "SOLELtm SF-10", Solae LLC, 4. Oktober 2012

## Beschreibung

Die Erfindung betrifft eine Emulgatorzusammensetzung. Sie betrifft ferner die Verwendung einer solchen Zusammensetzung.

In der Lebensmittelindustrie werden zur Färbung von Nahrungsmitteln seit langem Farbstoffe eingesetzt. Diese, nach ihrem Verwendungszweck als Lebensmittelfarbstoffe bezeichneten Substanzen sind in vielen Fällen jedoch nicht wasserlöslich, sondern fettlöslich. Eine Verwendung fettlöslicher Substanzen in wasserhaltigen Lebensmitteln wie Säften ist somit nicht ohne weiteres möglich.

Fettlösliche Farbstoffe können jedoch in wasserhaltigen Lebensmitteln in Form von Öl-in-Wasser-Emulsionen emulgiert werden. Dabei bildet die ÖlPhase die dispergierte Phase, während die wässerige Phase die kohärente Phase bildet. Zur Stabilisierung dieser Emulsionen werden Emulgatoren eingesetzt, die eine Phasentrennung verhindern. Mittels der Emulgatoren werden die fettlöslichen Lebensmittelfarbstoffe somit in eine wasserlösliche Form überführt.

Als Emulgatoren werden in Lebensmitteln beispielsweise Lecithin (E 322) oder Zuckerester von Speisefettsäuren (E 473) verwendet.

Die Wahl des Emulgators hängt von den Eigenschaften des Lebensmittels und des fettlöslichen Farbstoffes ab. Bei der Verwendung von fettlöslichen Lebensmittelfarben zur Färbung von Fruchtsäften ist zu beachten, dass Fruchtsäuren eine Zerstörung des Emulgators bewirken können. Aus diesem Grunde ist die Verwendung säurestabiler Emulgatoren wünschenswert. Die bisher bekannten Emulgatoren weisen jedoch überwiegend nur eine geringe Säurestabilität auf.

Die WO 2007/026271 A offenbart eine stabile Mikroemulsion, die als Emulgatoren Lecithin und Zuckerester von Fettsäuren enthält.

Nach der WO 01/08507 A ist eine Mischung von Emulgatoren für ein Getränk bekannt, die Lecithin und Zuckerester sowie Kaffeeweißer enthält. Des Weiteren bezieht sich die Mischung nicht auf die Emulgierung von Carotinoiden. Kaffeeweißer kann nicht als Farbstoff für ein Lebensmittel angesehen werden; er ist ein Grundstoff, nicht ein Farbstoff.

Aus der WO2005/122784 A ist eine lebensmitteltaugliche Tinte bekannt, die Lecithin und Sorbitanester als Emulgator enthält. Diese lebensmitteltaugliche Tinte ist zum Bedrucken von essbaren Substanzen und ist kein Lebensmittel, sondern die zur Modifizierung (Bedrucken) von Lebensmitteln dient.

Ein Emulgatorsystem, das Lecithin und Zuckerglyceride enthält und mit Ölkörpern stabile Emulsionen bildet ist durch die GB-A-1049335 bekannt. Es geht hier um die Herstellung von Pasten oder Milchprodukten, die Eier enthalten.

Die EP-A-1 270 679 offenbart ein Farbstoffgemisch, das Karotin und einen Emulgator enthalten kann.

Dieser Emulgator ist aus einer Gruppe von Emulgatoren ausgewählt, die aus Lecithin, Polysorbat 80, Lactene und/oder Citrem ausgewählt ist. Eine Kombination aus zwei Emulgatoren ist nicht offenbart.

Nach der GB 918 399 A ist eine wasserdispergierbare Zusammensetzung bekannt, die Lecithin als Emulgator enthält und beispielsweise als Getränkegrundlage geeignet ist. In diesen Zusammensetzungen wird das Karotin nicht durch die in Fruchtsäften vorhandene Ascorbinsäure zerstört.

Karotinoidhaltige Getränke, die Zuckerester mit Fettsäuren als Emulgator enthalten, offenbart die JP 09084566 A. Die hier eingesetzten Farbstoffe weisen eine ausgezeichnete Hitze- und Lichtstabilität auf, ohne durch den pH-Wert beeinflusst zu werden.

Die US-B2-6 635 293 offenbart Karotinoide, die z. B. in Getränken eingesetzt werden und die Emulgatoren, ausgewählt aus Zuckerestern und Lecithin, enthalten.

Aufgabe der Erfindung ist es, die Nachteile nach dem Stand der Technik zu beseitigen. Es soll insbesondere eine Emulgatorzusammensetzung angegeben werden, die eine hohe Säurestabilität aufweist und somit die Emulgierung von Lebensmittelfarbstoffen in Lebensmitteln wie Fruchtgetränken oder Fruchtzubereitungen, ermöglicht.

Diese Aufgabe wird durch die Merkmale der Ansprüche 1, 6 und 7 gelöst. Zweckmäßige Ausgestaltungen der Erfindung ergeben sich aus den Merkmalen der weiteren Ansprüche.

Die Erfindung basiert auf der überraschenden Feststellung, das die erfindungsgemäße Emulgatorzusammensetzung eine hohe Säurestabilität aufweist. Die Säurestabilität der erfindungsgemäßen Emulgatorzusammensetzung übersteigt die der einzelnen Komponenten deutlich. Aus diesem Grund kann die Emulgatorzusammensetzung zur Emulgierung von Lebensmittelfarbstoffen in Lebensmitteln mit sauren Eigenschaften wie Fruchtgetränken oder Fruchtzubereitungen verwendet werden. Darüber hinaus stellt die erfindungsgemäße Emulgatorzusammensetzung ein effizientes System zur Emulgierung von fettlöslichen Lebensmittelfarbstoffen dar.

Vorzugsweise ist der Zuckerester ein Saccharoseester, besonders bevorzugt ein Saccharosemonoester, Saccharosediester oder Saccharosetriester.

Die Fettsäure ist eine gesättigte Fettsäure oder eine ungesättigte Fettsäure, die aus der Gruppe ausgewählt ist, die aus Palmitinsäure, Stearinsäure, Ölsäure, Laurinsäure und Erucasäure besteht. Im Falle eines Zuckerdi- oder -triesters können die veresterten Fettsäuren gleich oder unterschiedlich voneinander sein.

Erfindungsgemäß ist das Lecithin aus der Gruppe ausgewählt, die aus Phosphatidylcholin, Phosphatidylethanolamin und Phosphatidylinosit besteht Stärker bevorzugt ist das Lecithin Phosphatidylcholin.

Der fettlösliche Farbstoff ist ein Carotinoid.

Das Carotinoid kann aus der Gruppe gewählt sein, die Bixin, Capsanthin, Capsorubin, Lutein, Rhodoxanthin und Kombinationen dieser umfasst.

Die Emulgatorzusammensetzung umfasst (a) zwischen 45 und 55 Gew.-% zumindest des einen Lecithins und (b) zwischen 55 und 45 Gew.-% zumindest des einen Zuckeresters von Fettsäuren, jeweils bezogen auf das Gewicht der Emulgatorzusammensetzung.

Vorzugsweise enthält die Emulgatorzusammensetzung keine weiteren Bestandteile, sondern besteht lediglich aus dem zumindest einen Lecithin und dem zumindest einen Zuckerester von Fettsäuren.

Die erfindungsgemäße Emulgatorzusammensetzung wird zur Emulgierung eines oder mehrerer Carotinoide in einem Fruchtgetränk oder einer Fruchtzubereitung verwendet. Die erfindungsgemäße Emulgatorzusammensetzung kann auch zur Emulgierung eines fettlöslichen Farbstoffes in Lebensmitteln wie Süßwaren, Getränken und Joghurtprodukten verwendet werden. Die besondere Eignung beruht auf der hohen Säurestabilität der erfindungsgemäßen Emulgatorzusammensetzung.

### Beispielhafte Beschreibung einer Emulgatorzusammensetzung in einer säurestabilen Beta-Carotin 1 % O/W Emulsion

Zur Herstellung der Emulgatorkombination in einer Beta-Carotinemulsion wurden folgende Ausgangsstoffe bereitgestellt und wie beschrieben verarbeitet, die prozentualen Angaben beziehen sich auf die Gesamtrezeptur der Farbstoffzubereitung:

### 1. Ölphase, enthält Lecithin E-322:

| | |
|---|---|
| Lecithin E-322 | 2 % |
| Beta-Carotin (kristallin) E-160a | 1 % |
| Sonnenblumenöl | 10 % |
| Ascorbylpalmitat E-304 | 1 % |
| Tocopherol E-307 | 1 % |

Die Komponenten werden vermischt und bis zu einer Temperatur von 140° C erhitzt, bis sämtliche Carotinkristalle in der Ölphase gelöst sind.

### 2. Wasserphase, enthält Zuckerester E-473

| | |
|---|---|
| Zuckerester E-473 | 2 % |
| Sorbitolsirup 70 % E-420 | 77 % |
| Demineralisiertes Wasser | 6 % |

Die Komponenten werden unter Rühren vermischt und auf 80° C erwärmt.

### 3. Verrühren und Homogenisieren der O/W Emulsion

Anschließend wird die Ölphase auf ca. 80° C abgekühlt und unter Rühren der Wasserphase bei 80° C zugesetzt. Nach der Zugabe der O-Phase in die W-Phase wird die Emulsion über Dispergierungs- und Hochdruck-Homogenisierungssysteme bis 500 bar bis zu einer Partikelgröße der Öltröpfchen von 90 % < 1 my dispergiert.

### 4. Anwendungstests in Endprodukten

Die Beta-Carotinemulsion 1 % wird in folgenden Anwendungen bewertet:

### 4.1. Ausmischung in einer Fruchtzubereitung:

Rezeptur und Herstellung:
1.

| | |
|---|---|
| 560 g | Wasser |
| 150 g | Zucker |
| 0,35 g | Kaliumsorbat |

mischen und auf 60° C in einem kleinen Topf erhitzen
2.

| | |
|---|---|
| 50 g | Zucker |
| 2,5 g | Apfel-Pectin |

vermischen und bei 60° C zugeben, anschließend auf 93° C erhitzen
3.

| | |
|---|---|
| 50g | Wasser |
| 50g | Stärke (Maisstärke) |

vermischen und hinzugeben
4.

| | |
|---|---|
| 100 g | Zucker |

5.

| | |
|---|---|
| 1 g | Zitronensäure |

zu der Mischung zugeben.
- Die Zubereitung einige Minuten auf ca. 90° C erhitzen.
- Den Brix auf 33 mit Wasser einstellen.
- Die Fruchtzubereitungsbasis wird mit Zitronensäure versetzt.
- Der Farbstoff Carotin 1 % wird mit 1 g/kg zur fertigen Fruchtzubereitung dosiert.

### 4.2. Ausmischung in einer Getränkebasis:

Rezeptur und Herstellung:

| | |
|---|---|
| demineralisiertes Wasser | 1 l |
| Invertzuckersirup (66 Brix) | 138 g/l |
| Kaliumsorbat | 0,2 g/l |
| Natriumbenzoat | 0,15 g/l |
| Zitronensäure | 21 g/l |
| Ascorbinsäure | 0,1 g/l |

- Das Wasser wird kurz zum Kochen gebracht.
- Invertzuckersirup, Kaliumsorbat, Natriumbenzoat werden zugegeben und vermischt.
- Die Getränkebasis wird mit Zitronensäure versetzt.
- Der Farbstoff Carotin 1 % wird mit 1 g/kg zur Getränkebasis dosiert.

### 5. Bewertung der Farbstoff-Stabilität:

Über einen Zeitraum von 8 Wochen war der Carotinfarbstoff 1 % bei konstanter Farbintensität ohne Hinweis auf Separation oder Farbabbau in beiden Ausmischungen (Fruchtzubereitung, Getränk) stabil.

## Patentansprüche

1. Emulgatorzusammensetzung zur Emulgierung zumindest eines fettlöslichen Farbstoffes in einem Lebensmittel,
**dadurch gekennzeichnet,**
**dass** sie, jeweils bezogen auf das Gewicht der Emulgatorzusammensetzung,
(a) zwischen 45 und 55 Gew.-% zumindest eines Lecithins; und
(b) zwischen 55 und 45 Gew.-% zumindest eines Saccharoseesters von Fettsäuren umfasst, wobei
- die Fettsäure aus der Gruppe ausgewählt ist, die aus Palmitinsäure, Stearinsäure, Ölsäure, Laurinsäure und Erucasäure besteht;
- das Lecithin aus der Gruppe ausgewählt ist, die aus Phosphatidylcholin, Phosphatidylethanolamin und Phosphatidylinosit besteht;
- der fettlösliche Farbstoff ein Carotinoid ist und
- das Lebensmittel ein Fruchtgetränk oder eine Fruchtzusammensetzung ist.

2. Emulgatorzusammensetzung nach Anspruch 1,
**dadurch gekennzeichnet,**
**dass** der Saccharoseester ein Saccharosemonoester, Saccharosediester oder Saccharosetriester ist.

3. Emulgatorzusammensetzung nach Anspruch 2,
**dadurch gekennzeichnet,**
**dass** im Fall eines Saccharosediesters oder Saccharosetriesters die veresterten Fettsäuren gleich oder unterschiedlich voneinander sein können.

4. Emulgatorzusammensetzung nach einem der vorangehenden Ansprüche,
**dadurch gekennzeichnet,**
**dass** das Lecithin Phosphatidylcholin ist.

5. Emulgatorzusammensetzung nach einem der vorangehenden Ansprüche,
**dadurch gekennzeichnet,**
**dass** das Carotinoid aus der Gruppe ausgewählt ist, die Bixin, Capsanthin, Capsorubin, Lutein, Rhodoxanthin und Kombinationen dieser umfasst.

6. Verwendung einer Emulgatorzusammensetzung nach einem der vorstehenden Ansprüche zur Emulgierung eines Carotinoids in einem Fruchtgetränk oder einer Fruchtzusammensetzung.

7. Emulsion, erhalten unter Verwendung einer Emulgatorzusammensetzung nach Anspruch 1,
**dadurch gekennzeichnet,**
**dass** die Emulsion folgende Gesamtrezeptur aufweist:
(a) Ölphase,
- Lecithin 2 %
- β-carotin 1 %
- Sonnenblumenöl 10%
- Ascorbylpalmitat 1 %
- Tocopherol 1 %
(b) Wasserphase,
- Zuckerester 2 %
- Sorbitolsirup (70 %) 77%
- demineralisiertes Wasser 6 %

## Claims

1. An emulsifier composition for emulsifying at least one fat-soluble colorant in a foodstuff,
**characterized in that**
it comprises, each based on the weight of the emulsifier composition:
(a) between 45 wt% and 55 wt% of at least one lecithin and
(b) between 55 wt% and 45 wt% of at least one sucrose ester of fatty acids,
wherein
- the fatty acid is selected from the group consisting of palmitic acid, stearic acid, oleic acid, lauric acid and erucaic acid.
- the lecithin is selected from the group consisting of phosphatidylcholine, phosphatidylethanolamine and phosphateidylinositol.
- the fat-soluble colorant is a carotenoid, and
- the foodstuff is a fruit beverage or a fruit composition.

2. The emulsifier composition according to claim 1,
**characterized in that**
the sucrose ester is a sucrose monoester, sucrose diester or sucrose triester.

3. The emulsifier composition according to claim 2,
**characterized in that**
in the case of a sucrose diester or sucrose triester, the esterified fatty acids may be the same as or different from one another.

4. The emulsifier composition according to any one of the preceding claims,
**characterized in that**
the lecithin is phosphatidylcholine.

5. The emulsifier composition according to any one of the preceding claims,
**characterized in that**
the carotenoid is selected from the group comprising bixin, capsanthin, capsorubin, lutein, rhodoxanthan and combinations thereof.

6. The use of an emulsifier composition according to any one of the preceding claims for emulsifying a carotenoid in a fruit beverage or a fruit composition.

7. The emulsion obtained by using an emulsifier composition according to claim 1,
**characterized in that**
the emulsion has the following overall recipe:
(a) oil phase
- lecithin 2%
- β-carotene 1%
- sunflower oil 10%
- ascorbyl palmitate 1%
- tocopherol 1%
(b) aqueous phase
- sugar ester 2%
- sorbitol syrup (70%) 77%
- demineralized water 6%.

## Revendications

1. Composition d'émulsifiants destinée à émulsifier au moins un colorant liposoluble au sein d'un aliment,
**caractérisée en ce**
**qu'**elle comprend, exprimé par rapport au poids de ladite composition d'émulsifiants,
(a) entre 45 et 55 % en poids d'au moins une lécithine et
(b) entre 55 et 45 % en poids d'au moins un ester de saccharose d'acides gras,
- l'acide gras étant choisi dans le groupe consiste en l'acide palmitique, l'acide stéarique, l'acide oléique, l'acide laurique et l'acide érucique ;
- ladite lécithine étant choisie dans le groupe consiste en la phosphatidylcholine, la phosphatidyléthanolamine et le phosphatidylinositol ;
- ledit colorant liposoluble étant un caroténoïde et
- ledit aliment étant une boisson à base de fruits ou une composition à base de fruits.

2. Composition d'émulsifiants selon la revendication 1,
**caractérisée** en ce
ledit ester de saccharose est un monoester de saccharose, un diester de saccharose ou un triester de saccharose.

3. Composition d'émulsifiants selon la revendication 2,
**caractérisée** en ce
dans le cas d'un diester de saccharose ou d'un triester de saccharose, les acides gras estérifiés peuvent être identiques un différents l'un de l'autre.

4. Composition d'émulsifiants selon l'une des revendications précédentes,
**caractérisée en ce**
**que** ladite lécithine est de la phosphatidylcholine.

5. Composition d'émulsifiants selon l'une des revendications précédentes,
**caractérisée** en ce
ledit caroténoïde est choisi dans le groupe comprenant la bixine, la capsanthine, la capsorubine, la lutéine, la rhodoxanthine et leurs combinaisons.

6. Utilisation d'une composition d'émulsifiants selon l'une des revendications précédentes pour émulsifier un caroténoïde au sein d'une boisson à base de fruits ou d'une composition à base de fruits.

7. Emulsion, obtenue en utilisant une composition d'émulsifiants selon la revendication 1,
**caractérisée en ce**
**que** ladite émulsion présente la formule globale suivante :
(a) phase huileuse
- lécithine 2 %
- β-carotène 1 %
- huile de tournesol 10%
- ascorbylpalmitate 1 %
- tocophérol 1 %
(b) phase aqueuse
- sucroesters 2 %
- sirop de sorbitol (70 %) 77 %
- eau déminéralisée 6%.
